# EUROPEAN PATENT SPECIFICATION

(11) **EP 1 630 195 B1**
(45) Date of publication and mention of the grant of the patent: **07.05.2008**
(21) Application number: 05017789.8
(22) Date of filing: 16.08.2005
(51) Int. Cl.: C08K 5/00, C08L 67/04, C08K 7/02, C08K 9/00, C08K 13/00, C08J 5/18, C08J 5/04, C08J 5/06

(54) **Composite composition and molding using the same**
Kompositzusammensetzung und daraus hergestelltes Formteil
Composition composite et object moulé utilisant celle-ci

(30) Priority: 26.08.2004 JP 2004247010
(43) Date of publication of application: 01.03.2006
(73) Proprietor: Sony Corporation, Tokyo (JP)
(72) Inventor: Yamada, Shinichiro, Shinagawa-ku Tokyo (JP); Horie, Takeshi, Shinagawa-ku Tokyo (JP); Aoki, Yuya, Shinagawa-ku Tokyo (JP); Fujihira, Yuko, Shinagawa-ku Tokyo (JP); Mori, Hiroyuki, Shinagawa-ku Tokyo (JP); Noguchi, Tsutomu, Shinagawa-ku Tokyo (JP)
(74) Representative: Müller - Hoffmann & Partner

(56) References cited:
- EP-A- 1 354 917
- EP-A- 1 564 316
- JP-A- 2002 173 606
- US-A- 5 760 118
- PATENT ABSTRACTS OF JAPAN vol. 1998, no. 08, 30 June 1998 (1998-06-30) & JP 10 077395 A (SEKISUI CHEM CO LTD), 24 March 1998 (1998-03-24)

## Description

### BACKGROUND OF THE INVENTION

### 1. Field of the Invention

The present invention relates to a composite composition biodegradable in the natural environment and having heat resistance and use durability sufficient for practical use.

### 2. Description of the Related Art

In recent years, a wide variety of synthetic resin materials have been developed and provided, and the amounts of these resin materials used in various industrial fields have been increasing year after year. As a result, the amount of synthetic resin waste tends to increase. However, the incineration of synthetic resin waste without any treatment may produce a toxic gas and damage an incinerator due to large combustion heat, thereby causing the large problem of environmental loads.

A known method for treating waste resins includes decreasing the molecular weights of the waste resins by treatment, such as thermal decomposition or chemical decomposition, and then disposing the resins by incineration or landfill.

However, incineration is accompanied with emission of carbon dioxide and thus causes global warming.

When the resin to be incinerated contains sulfur, nitrogen, halogen, incineration produces a toxic gas and thus brings about air pollution.

On the other hand, when resins are disposed by inappropriate landfill, the resins remain undecomposed for a long period of time because most of resins which are currently used for various purposes are chemically stable, thereby causing soil pollution.

In order to solvent the above-described problem of the environmental effect of synthetic resins, recently, various biodegradable resins have been being developed and brought into practical applications.

The biodegradable resins have the property of being biochemically decomposed into carbon dioxide, water, by microorganisms, and even when the resins are discarded in a natural environment, they are easily degraded into lower-molecular-weight compounds and finally converted to harmless compounds. Therefore, the biodegradable resins are characterized by decreasing the adverse effect of waste disposal on the global environment. For this reason, the practical applications of the biodegradable resins have been particularly advanced to disposable goods such as convenience goods, sanitary goods, and play goods.

As described above, it is said that the biodegradable resins have an excellent effect in view of the preservation of the natural environment. However, from a practical viewpoint, the resins still have many problems to be solved.

For example, materials such as casings of electric appliances and automobile interior materials preferably have heat resistance, but the biodegradable resins have relatively low heat resistance. Therefore, a technique for mixing organic fibers such as cotton fibers, wood fibers, bamboo fibers, with a biodegradable resin has been proposed (refer to, for example, Japanese Unexamined Patent Application Publication Nos. 9-302235, 2000-160034, and 2003-313417).

### SUMMARY OF THE INVENTION

In consideration of the fact that biodegradable resins are used for various moldings such as electric appliances and automobile interior materials, which will be more precisely produced by further advanced technology in future, there are demands to further improve rigidity and heat resistance and significantly improve preservation stability (use durability).

For example, even when a drive source generates heat or a precision actuator locally generates heat, a molding is preferably not thermally deformed. However, when polylactic acid which is a biodegradable resin is applied to an electric machine casing or an automobile interior material on which the drive source or actuator is mounted, there occurs the problem of significantly decreasing storage modulus in a temperature region over the glass transition temperature (58°C) of polylactic acid. Therefore, it is desired to significantly improve heat resistance, for solving the problem.

Also, for example, a small audio good preferably maintains the physical properties such as strength at 30°C and a relative humidity of 80% for 5 to 7 hears. However, a sufficient storage property has not been realized by the above-described proposed technique, and thus improvement in durability (durability in a constant temperature and humidity environment) is desired for resolving the problem of sufficient storage property.

Accordingly, the invention provides a composite composition capable of decreasing the influence of disposal on the natural environment and having excellent biodegradability, practically sufficient heat resistance and excellent mechanical strength, and also having sufficient durable, i.e., storage property, even when used for electric appliances and automobile interior materials.

In accordance with an embodiment of the invention, there are provided a composite composition containing at least one organic polymer compound having biodegradability, vegetable fibers, and a hydrolysis inhibitor for the biodegradable organic polymer compound, and a molding produced using the composite composition.

In the invention, mechanical strength and heat resistance are improved by adding the vegetable fibers to the biodegradable resin, and storage durability is improved by adding the hydrolysis inhibitor.

The composite composition is finally biodegraded to harmless substances in a natural environment, thereby effectively decreasing the influence on the environment. Also, when the composite composition is used for a casing of a device including a heat source such as a drive source or a power supply, practically sufficient mechanical strength, heat resistance, and use durability (storage property) may be exhibited.

In other words, the composite composition has a ternary system containing the biodegradable resin, the vegetable fibers, and the hydrolysis inhibitor, and thus has biodegradability, heat resistance, mechanical strength, and storage property.

### BRIEF DESCRIPTION OF THE DRAWINGS

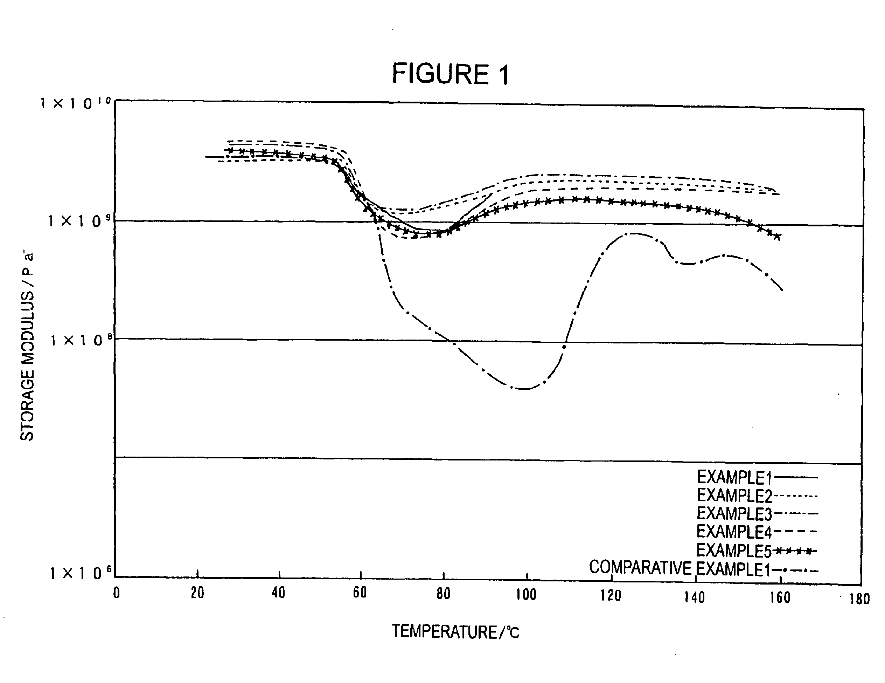

Fig. 1 is a graph showing the test results of viscoelasticity of samples of examples and a comparative example.

### DESCRIPTION OF THE PREFERRED EMBODIMENTS

An embodiment of the invention will be described in detail below, but the invention is not limited to this embodiment.

In accordance with an embodiment of the invention, a composite composition contains at least one organic polymer compound having biodegradability, vegetable fibers, and a hydrolysis inhibitor.

First, the organic polymer compound having biodegradability will be described.

The organic polymer compound having biodegradability (referred to as the "biodegradable polymer compound" hereinafter) is a compound which is, after use, converted to low-molecular-weight compounds and finally decomposed into water and carbon dioxide by microorganisms in the natural world (Biodegradable Plastic Society, ISO/TC-207/SC3).

The biodegradable polymer compound is preferably a biodegradable resin, for example, a polysaccharide, a peptide, an aliphatic polyester, a polyamino acid, polyvinyl alcohol, a polyamide, polyalkylene glycol, or the like, which has biodegradability, or a copolymer containing at least one of these compounds.

In particular, an aliphatic polyester is excellent in mixing property and mass productivity, and is thus a material suitable for practical application.

The aliphatic polyester is more preferably polylactic acid such as poly-L-lactic acid (PLLA) or a random copolymer of L-lactic acid and D-lactic acid, or a derivative thereof. A general polylactic acid is a crystalline polymer having a melting point of 160 to 170°C, a glass transition temperature of about 58°C, and excellent biodegradability. In accordance with an embodiment of the present invention, heat resistance may be improved to a higher temperature, and the storage property suitable for durable consumer goods material may be also secured, as described below.

Other examples of the aliphatic polyester include polycaprolactone, polyhydroxybutyric acid, polyhydroxyvaleric acid, polyethylene succinate, polybutylene succinate, polybutylene adipate, polymalic acid, polyglycolic acid, polysuccinates, polyoxalates, butylene polydiglycolate, polydioxanone, and microbially-synthesized polyesters, e.g., 3-hydroxybutylate (3HB), 3-hydroxyvalerate (3HV), and copolymers thereof.

The molecular weight (number-average molecular weight) of the aliphatic polyester is preferably about 30,000 to 200,000.

With a molecular weight less than 30,000, the strength of the composite composition obtained as a final product becomes insufficient, while with a molecular weight of over 200,000, moldability and formability degrade.

Examples of the polysaccharide include cellulose, starch, chitin, chitosan, and dextran, derivatives thereof, and copolymers containing at least one of these compounds.

Examples of the peptide include collagen, casein, fibrin, and gelatin.

Examples of the polyamide include nylon 4 and nylon 2/nylon 6 copolymers.

When a polysaccharide is used, any of various plasticizers may be added for imparting thermoplasticity.

Furthermore, an organic polymer compound which exhibits biodegradability with a low molecular weight but exhibits lower biodegradability with a high molecular weight may be used as long as biodegradability is achieved by graft copolymerization with a biodegradable polymer compound. For example, polyethylene, a polyacrylic acid derivative, polypropylene, polyurethane, may be used.

The molecular weights and the terminal groups of these resins are not particularly limited as long as mechanical strength is achieved by polymerization.

The biodegradable polymer compound may be prepared by a know method.

For example, the biodegradable polyester may be prepared by a lactide process, polycondensation of a polyhydric alcohol and a polybasic acid, or intermolecular polycondensation of a hydroxycarboxylic acid having a hydroxyl group and a carboxyl group in its molecule.

Next, description will be made of the vegetable fibers which constitute the composite composition according to an embodiment of the invention.

The vegetable fibers are not particularly limited, but cotton fibers and paper fibers are preferred.

The cotton fibers preferably have an average fiber diameter of 100 µm or less. This is because with an average fiber diameter over 100 µm, dispersibility in the biodegradable polymer compound decreases, and the effect of improving the rigidity and heat resistance of the composite composition obtained as the final target becomes unsatisfactory. The technical lower limit of the average fiber diameter is not particularly limited.

The cotton fibers and paper fibers are preferably used after degreasing for removing a fat component. By removing a fat component from the cotton fibers, the fibers are easily uniformly dispersed in the biodegradable polymer compound, thereby exhibiting the effect of improving the rigidity and heat resistance of the composite composition as the final target and also the effect of suppressing coloring with the cotton fibers. However, when coloring causes no problem with the appearance, degreasing may be not performed.

Furthermore, the cotton fibers and paper fibers are preferably subjected to chemical surface treatment for improving affinity for the biodegradable polymer compound and the dispersibility therein. Examples of the surface treatment include acylation such as acetylation and benzoylation, and silane coupling treatment.

Such surface treatment improves the surface adhesion to the biodegradable polymer compound, for example, an aliphatic polyester, thereby suppressing a decrease in strength due to peeling at the interfaces between the resin and the fibers.

The mixing ratio (weight ratio) of the biodegradable polymer compound (e.g., an aliphatic polyester) to the vegetable fibers is preferably 95/5 to 40/60 (aliphatic polyester/vegetable fibers)

With a vegetable fiber content of less than 5% by weight, the sufficient effect of improving heat resistance is not obtained, while with a vegetable fiber content of over 60% by weight, a problem with a practical material, such as a decrease in strength of the composite composition as the final product, or the like occurs.

As the vegetable fibers, the cotton fibers and the paper fibers are preferred, and chopped hemp or cotton is preferred. The chopped hemp or cotton includes microfibers obtained by colleting fiber dust produced in machine weaving.

Next, the hydrolysis inhibitor constituting the composite composition according to an embodiment of the invention will be described.

The hydrolysis inhibitor is an additive, e.g., a compound having reactivity to active hydrogen of the biodegradable polymer compound, for suppressing hydrolysis of the biodegradable polymer compound. This compound decreases the amount of active hydrogen in the biodegradable polymer compound and avoids catalytic hydrolysis of the biodegradable polymer chain with the active hydrogen.

The active hydrogen means hydrogen in a bond (N-H bond or O-H bond) between hydrogen and oxygen, nitrogen, or the like, and such hydrogen has higher reactivity than that of hydrogen in a carbon-hydrogen bond (C-H bond). Specifically, the active hydrogen is hydrogen of, for example, a carboxyl group (-COOH), a hydroxyl group (-OH), an amino group (-NH₂), or an amide bond (-NHCO-), in the biodegradable polymer compound.

Examples of the compound having reactivity to the active hydrogen in the biodegradable polymer compound include carbodiimide compounds, isocyanate compounds, and oxozoline compounds. In particular, the carbodiimide compounds are melt-kneadable with the biodegradable polymer compound and thus exhibit the effect of suppressing hydrolyzability of the polymer compound in a small adding amount.

The carbodiimide compounds have at least one carbodiimide group per molecule and include polycarbodiimide compounds.

A carbodiimide compound is synthesized by, for example, a method of decarboxylation polycondensation of any one of various polymer isocyanates at about 70°C or more in an inert solvent (e.g., hexane, benzene, dioxane, or chloroform) or without a solvent using, as a catalyst, an organophosphorus compound such as O,O-dimethyl-O- (3-methyl-4-nitrophenyl) phosphorothioate, O,O-dimethyl-O- (3-methyl-4-(methylthio)phenyl) phosphorothioate, or O,O-diethyl-O-2-isopropyl-6-methylpyrimidine-4-yl phosphorothioate (O represents any number), or an organometallic compound such as a rhodium complex, a titanium complex, a tungsten complex, or a palladium complex.

Examples of a monocarbodiimide compound which is one of the carbodiimide compounds include dicyclohexylcarbodiimide, diisopropylcarbodiimide, dimethylcarbodiimide, diisobutylcarbodiimide, dioctylcarbodiimide, diphenylcarbodiimide, and naphthylcarbodiimide. In particular, dicyclohexylcarbodiimide and diisopropylcarbodiimide are preferred because they are industrially easily available.

Examples of the isocyanate compounds include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, isophorone diisocyanate, 4,4'-dicyclohexylmethane diisocyanate, and 3,3'-dimethyl-4,4'-dicyclohexylmethane diisocyanate.

The isocyanate compounds may be synthesized by a known method, and commercially-available isocyanate compounds may be appropriately used.

Applicable examples of commercially available polyisocyanate compounds include aromatic isocyanate adducts, such as Coronate (trade named, manufactured by Nippon Polyurethane Industries Co., Ltd., hydrogenated diphenylmethane diisocyanate) and Millionate (trade named, manufactured by Nippon Polyurethane Industries Co., Ltd.).

In particular, a solid polyisocyanate compound in which for example, an isocyanate group is blocked with a masking agent (a polyhydric aliphatic alcohol, an aromatic polyol, or the like) is more preferred than a liquid.

Examples of the oxazoline compounds include 2,2'-o-phenylenebis(2-oxazoline), 2,2'-m-phenylenebis(2-oxazoline), 2,2'-p-phenylenebis(2-oxazoline), 2,2'-p-phenylenebis(4-methyl-2-oxazoline), 2,2'-m-phenylenebis(4-methyl-2-oxazoline), 2,2'-p-phenylenebis(4,4'-dimethyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-ethylenebis(4-methyl-2-oxazoline), and 2,2'-diphenylenebis(2-oxazoline).

The biodegradation speed and mechanical strength of the composite composition obtained as the final product may be controlled by controlling the type and adding amount of the hydrolysis inhibitor. Therefore, the type and mixing amount of the hydrolysis inhibitor are determined according to the type of the molding produced using the composite composition according to an embodiment of the invention.

Specifically, the amount of the hydrolysis inhibitor added is preferably about 7% by weight or less.

As the hydrolysis inhibitor, the compounds listed above may be used alone or in combination of two or more.

The method for producing the composite composition according to an embodiment of the invention is not particularly limited, and a know method may be used.

For example, the composite composition may be produced by melt-kneading the biodegradable polymer compound with the vegetable fibers and the hydrolysis inhibitor.

Specifically, the vegetable fibers and the hydrolysis inhibitor are added and mixed in a pre-step or melting step of melting the biodegradable organic polymer compound.

The vegetable fibers and the hydrolysis inhibitor may be added simultaneously or separately. When both are added separately, they may be added in any desired order.

Also, one of the vegetable fibers and the hydrolysis inhibitor may be added and mixed after the biodegradable organic polymer compound is melted, the resulting composite composition may be again melted, and then the other of the hydrolysis inhibitor and the vegetable fibers may be added and mixed.

The composite composition according to an embodiment of the invention may contain various additives such as a flame retardant, a lubricant, a wax, a plasticizer, a thermal stabilizer, a reinforcing agent, an inorganic or organic filler, a colorant, an antioxidant, an ultraviolet absorber, and a crystallization promoter.

The content of each of the additives is preferably 0.1% by weight or less and less than 50% by weight. With a content of less than 0.1% by weight, each of the functions is difficult to exhibit, while with a content over 50% by weight, the target physical properties (biodegradability, heat resistance, and preservation stability) of the composite composition according to an embodiment of the invention may be inhibited.

Examples of the flame retardant include various boric acid flame-retardant compounds, phosphorus flame-retardant compounds, inorganic flame-retardant compounds, nitrogen flame-retardant compounds, halogen flame-retardant compounds, organic flame-retardant compounds, and colloidal flame-retardant compounds. Specific materials are given below, but these materials may be used alone or as a mixture of two or more.

Examples of the boric acid flame-retardant compounds include zinc borate hydrate, barium metaborate, and borax.

Examples of the phosphorus flame-retardant compounds include ammonium phosphate, ammonium polyphosphate, melamine phosphate, red phosphorus, phosphoric acid esters, tris(chloroethyl) phosphate, tris(monochloropropyl) phosphate, tris(dichloropropyl) phosphate, triallyl phosphate, tris(3-hydroxypropyl) phosphate, tris(tribromophenyl) phosphate, tris-β-chloropropyl phosphate, tris(dibromophenyl) phosphate, tris(tribromoneopentyl) phosphate, tetrakis(2-chloroethyl)ethylene diphosphate, dimethylmethyl phosphate, tris(2-chloroethyl) orthophosphate, aromatic condensed phosphates, halogen-containing condensed organic phosphates, ethylene-bis-tris(2-cyanoethyl)phosphonium bromide, ammonium polyphosphate, β-chloroethyl acid phosphates, butyl pyrophosphate, butyl acid phosphate, butoxyethyl acid phosphate, 2-ethylhexyl acid phosphate, melamine phosphate, halogen-containing phosphates, and phenylphosphonic acid.

Examples of the inorganic flame-retardant compounds include metal sulfate compounds, such as zinc sulfate, potassium hydrogen sulfate, aluminum sulfate, antimony sulfate, sulfuric acid esters, potassium sulfate, cobalt sulfate, sodium hydrogen sulfate, iron sulfate, copper sulfate, sodium sulfate, nickel sulfate, barium sulfate, and magnesium sulfate; ammonium flame-retardant compounds such as ammonium sulfate; iron oxide combustion catalysts such as ferrocene; metal nitrate compounds such as copper nitrate; titanium-containing compounds such as titanium oxide; guanidine compounds such as guanidine sulfamate; and other compounds such as zirconium compounds, molybdenum compounds, tin compounds, carbonate compounds such as potassium carbonate, aluminum hydroxide, metal hydroxides such as magnesium hydroxide, and modified products thereof.

Examples of the nitrogen flame-retardant compounds include cyanurate compounds having triazine rings.

Examples of the halogen flame-retardant compounds include halogen-containing flame-retardant compounds, such as chlorinated paraffins, perchlorocyclopentadecane, hexabromobenzene, decabromodiphenyl oxide, bis(tribromophenoxy)ethane, ethylenebis-dibromonorbornane dicarboxyimide, ethylenebis-tetrabromophthalimide, dibromoethyl-dibromocyclohexane, dibromoneopentyl glycol, 2,4,6-tribromophenol, tribromophenyl allyl ether, tetrabromobisphenol A derivatives, tetrabromobisphenol S derivatives, tetradecabromo-diphenoxybenzene, tris-(2,3-dibromopropyl)-isocyanurate, 2,2-bis(4-hydroxy-3,5-dibromophenyl)propane, 2,2-bis(4-hydroxyethoxy-3,5-dibromophenyl)propane, poly(pentabromobenzylacrylate), tribromostyrene, tribromophenylmaleimide, tribromoneopentyl alcohol, tetrabromodipentaerythritol, pentabromobenzyl acrylate, pentabromophenol, pentabromotoluene, pentabromodiphenyl oxide, hexabromocyclododecane, hexabromodiphenyl ether, octabromophenol ether, octadibromodiphenyl ether, octabromodiphenyl oxide, magnesium hydroxide, dibromoneopentyl glycol tetracarbonate, bis(tribromophenyl)fumaramide, N-methylhexabromodiphenylamine, styrene bromide, and diallyl chlorendate.

Examples of the organic flame-retardant compounds include chlorendic anhydride, phthalic anhydride, bisphenol A-containing compounds, glycidyl compounds such as glycidyl ether, polyhydric alcohols such as ethylene glycol and pentaerythritol, modified carbamide, silicone oil, and silica compounds such as silicon dioxide, low-melting-point glass, and organosiloxanes.

Examples of the colloidal flame-retardant compounds include colloids of flame-retardant compounds, such as known usual hydroxides having flame retardancy, e.g., aluminum hydroxide, magnesium hydroxide, and calcium hydroxide; hydrates, e.g., calcium aluminate, calcium sulfate dihydrate, zinc borate, barium metaborate, borax, and kaoline clay; nitric acid compounds, e.g., sodium nitrate; molybdenum compounds; zirconium compounds; antimony compounds; dawsonite; and plogopite.

A flame-retardant additive preferably applies no load on the environment in disposal, for example, generation of a harmful gas in incineration.

From the viewpoint of this environment friendliness, preferred examples of the flame-retardant additive include hydroxide compounds such as aluminum hydroxide, magnesium hydroxide, and calcium hydroxide; the above-described phosphorus compound, particularly ammonium phosphate compounds such as ammonium phosphate and ammonium polyphosphate; and silica compounds such as silicon dioxide, low-melting-point glass, and organosiloxanes.

A silica compound used as the flame-retardant additive preferably contains 50% or more of silicon dioxide. Since a silica compound is collected from a natural mineral, the silica compound contains other substances, e.g., MgO, CaO, Fe₂O₃, Al₂O₃, to some extent. However, it is desirable that the flame-retardant effect is not inhibited by impurities.

A hydroxide compound used as the flame-retardant additive preferably has a purity of about 99.5% or more because the higher the purity, the more the preservation stability is improved by combination with the hydrolysis inhibitor described below.

The purity of the hydroxide compound may be measured by a known method. For example, the content of the impurities in the hydroxide compound is measured by a known method, and the content of impurities is subtracted from the total amount to determine the purity of the hydroxide compound. More specifically, for example, aluminum hydroxide contains impurities such as Fe₂O₃, SiO₂, T-Na₂O, and S-Na₂O. The content of Fe₂O₃ is determined by O-phenanthroline spectrophotometry (JIS H 1901) after the compound is dissolved in a sodium carbonate-boric acid solution. The content of SiO₂ is determined by molybdenum blue spectrophotometry (JIS H 1901) after the compound is dissolved in a sodium carbonate-boric acid solution. The content of T-Na₂O is determined by flame photometry after the compound is dissolved in sulfuric acid, and the content of S-Na₂O is determined by flame photometry after the compound is extracted with hot water. The thus-determined contents are subtracted from the weight of aluminum hydroxide to determine the purity of the hydroxide. With a purity of 99.5% or more, of course, plural types of flame-retardant hydroxide compounds may be combined.

The shape of the flame-retardant additive is not particularly limited, but a granular shape is preferred. The grain size is appropriately selected according to the type used.

For example, when the flame-retardant additive is the silica compound such as SiO₂ or glass, the average grain size determined by laser diffraction is preferably about 50 µm or less. In this case, the grain size distribution is not particularly limited.

When the flame-retardant additive is a hydroxide compound such as Al(OH)₃, Mg(OH)₂, or Ca(OH)₂, the average grain size determined by laser diffraction is preferably about 100 µm or less. In this case, the grain size distribution is not particularly limited.

In view of dispersibility in kneading and injection moldability in a molding process for forming a molding using the composite composition according to an embodiment of the invention, the average grain size of the flame-retardant additive is preferably in the above range. Within the range, a smaller value is more preferred.

In order to improve the filling rate in the composition, plural types of flame-retardant additives having different average grain sizes may be combined.

Furthermore, when the flame-retardant additive is a hydroxide compound such as Al(OH)₃, Mg(OH)₂, or Ca(OH)₂, grains preferably have a BET specific surface area of about 5.0 m²/g or less determined by a nitrogen gas adsorption method.

In order to improve the filling rate in the composition, plural types of flame-retardant additives having different BET specific surface areas may be combined.

In view of moldability, the BET specific surface area is preferably about 5.0 m²/g or less, and a lower value is more preferred.

The amount of the flame-retardant additive added is appropriately determined in a range in which the mechanical strength of the composite composition according to an embodiment of the invention may be secured.

Specifically, when the flame-retardant additive is a hydroxide compound such as Al(OH)₃, Mg(OH)₂, or Ca(OH)₂, the amount of the flame-retardant additive added is about 5 to 50% by weight, preferably about 7.5 to 45% by weight, and more preferably about 10 to 40% by weight.

When the flame-retardant additive is an ammonium (poly) phosphate compound such as (NH₄)₃(PhO₃ₙ₊₁)ₙ₊₂ (n is a natural number), the amount of the flame-retardant additive added is about 1 to 25% by weight, preferably about 2 to 20% by weight, and more preferably about 3 to 15% by weight.

When the flame-retardant additive is a silica compound such as SiO₂ or glass, the amount of the flame-retardant additive added is about 5 to 40% by weight, preferably about 10 to 35% by weight, and more preferably about 15 to 30% by weight.

Examples of the reinforcing material include glass microbeads, carbon fibers, chalk, quartz such as novoculite, asbestos, and silicates such as feldspar, mica, talc, wollastonite, and kaoline.

Examples of the inorganic filler include fine particles of carbon; silicon dioxide; metal oxides such as alumina, silica, magnesia, and ferrite; silicates such as talc, mica, kaoline, and zeolite; barium sulfate; calcium carbonate; silicon nitride; silicides such as carbon silicide; and fullerene.

Examples of the organic filler include epoxy resins, melamine resins, urea resins, acrylic resins, phenol resins, polyimide resins, polyamide resins, polyester resins, and Teflon (trade name) resin.

In particular, silicon dioxide and silicides are preferred. The above-described fillers may be used alone or as a mixture of two or more.

Examples of the antioxidant include phenolic, amine, phosphoric, sulfuric, hydroquinone, and quinoline antioxidants.

Examples of the phenolic antioxidants include hindered phenols, such as 2,6-di-tert-butyl-p-cresol, 1,3,5-trimethyl-2,4,6-tris(3,5-di-tert-butyl-4-hydroxybenzyl)benzene, 2,2'-methylenebis(4-methyl-6-tertbutylphenol), 4,4'-methylenebis(2,6-di-tert-butylphenol), 4,4'-butylidenebis(3-methyl-6-tert-butylphenol), and C₂₋₁₀ alkylenediol-bis[3-(3,5-di-branched C₃₋₆ alkyl-4-hydroxyphenyl) propionate], e.g., 1,6-hexanediolbis[3-(3,5-di-tert-butyl-4-hydroxyphenyl)propionate]; di- or tri-oxy C₂₋₄ alkylenediol-bis[3-(3,5-di-branched C₃₋₆ alkyl-4-hydroxyphenyl)propionate], e.g., triethyleneglycol-bis[3-(3-tert-butyl-5-metyl-4-hydroxyphenyl)propionate]; C₃₋₈ alkanetriol-bis[3-(3,5-di-branched C₃₋₆ alkyl-4-hydroxyphenyl]propionate], e.g., glycerin tris[3-(3,5-di-tert-butyl-4-hydoxyphenyl)propionate]; C₄₋₈ alkane tetraol tetrakis[3-(3,5-di-branched C₃₋₆ alkyl-4-hydroxyphenyl)propionate], e.g., pentaerythritol tetrakis[3-(3,5-di-tert-butyl-4-hydroxypheny)propionate]; n-octadecyl-3-(4',5'-di-tert-butylphenol)propionate, n-octadecyl-3-(4'-hydoxy-3',5'-di-tert-butylphenol)propionate, stearyl-2-(3,5-di-tert-butyl-4-hydroxyphenol)propionate, distearyl-3,5-di-tert-butyl-4-hydroxybenzylphosphonate, 2-tert-butyl-6-(3-tert-butyl-5-methyl-2-hydroxybenzyl)-4-methylphenyl acrylate, N.N'-hexamethylenebis(3,5-di-tert-butyl-4-hydroxy-hydrocinnamide), 3,9-bis{2-[3-(3-tert-butyl-4-hydroxy-5-methylphenyl)propionyloxy]-1,1-dimethylethyl}-2,4,8,10-tetraoxaspiro[5,5]undecane, 4,4'-thiobis(3-methyl-6-tertbutylphenol), and 1,1,3-tris(2-methyl-4-hydroxy-5-tertbutylphenol)butane.

Examples of the amine antioxidants include phenyl-1-naphthylamine, phenyl-2-naphthylamine, N,N'-diphenyl-1,4-phenylenediamine, and N-phenyl-N'-cyclohexyl-1,4-phenylenediamine.

Examples of the phosphoric antioxidants include phosphite compounds, such as triisodecyl phosphite, triphenyl phosphite, trisnonylphenyl phosphite, diphenylisodecyl phosphite, phenyldiisodecyl phosphite, 2,2-methylenebis(4,6-di-tert-butylphenyl)octyl phosphite, 4,4'-butylidenebis(3-methyl-6-tert-butylphenyl)ditridecyl phosphite, tris(2,4-di-tert-butylphenyl) phosphite, tris(2-tert-butyl-4-methylphenyl) phosphite, tris(2,4-di-tert-amylphenyl) phosphite, tris(2-tert-butylphenyl) phosphite, bis(2-tert-butylphenyl)phenyl phosphite, tris[2-(1,1-dimethylpropyl)-phenyl] phosphite, tris[2,4-(1,1-dimethylpropyl)phenyl] phosphite, tris(2-cyclohexylphenyl) phosphite, and tris(2-tert-butyl-4-phenylphenyl) phosphite; and phosphine compounds, such as triethylphosphine, tripropylphophine, tributylphosphine, tricyclohexylphosphine, diphenylvinylphosphine, allyldiphenylphosphine, triphenylphosphine, methylphenyl-p-anisylphosphine, p-anisyldiphenylphosphine, p-tolyldiphenylphosphine, di-p-anisylphenylphosphine, di-p-tolylphenylphosphine, tri-m-aminophenylphosphine, tri-2,4-dimethylphenylphosphine, tri-2,4,6-trimethylphenylphosphine, tri-o-tolylphosphine, tri-m-tolylphosphine, tri-p-tolylphosphine, tri-o-anisylphosphine, tri-p-anisylphosphine, and 1,4-bis(diphenylphosphino)butane.

Examples of the hydroquinone antioxidants include 2,5-di-tert-butylhydroquinone.

Examples of the quinoline antioxidants include 6-ethoxy-2,2,4-trimethyl-1,2-dihydroquinoline.

Examples of the sulfuric antioxidants include dilauryl thiodipropionate and distearyl thiodipropionate.

Among these antioxidants, the phenolic antioxidants (particularly, hindered phenols), e.g., polyolpoly[(branched C₃₋₆ alkyl group and hydroxyl group-substituted phenyl)propionate], are particularly preferred.

The above-described antioxidants may be used alone or in combination or two or more.

Examples of the thermal stabilizer include nitrogen-containing compounds such as basic nitrogen-containing compounds, e.g., polyamide, poly-β-alanine copolymers, polyacrylamide, polyurethane, melamine, cyanoguanidine, and melamine-formaldehyde condensates; alkali or alkaline earth metal-containing compounds, such as organic carboxylic acid metal salts (e.g., calcium stearate and calcium 12-hydroxystearate), metal oxides (e.g., magnesium oxide, calcium oxide, and aluminum oxide), metal hydroxides (e.g., magnesium hydroxide, calcium hydroxide, and aluminum hydroxide), and metal carbonates; zeolite, and hydrotalcite.

In particular, the alkali or alkaline earth metal-containing compounds (particularly, alkaline earth metal-containing compounds, such as magnesium compounds and calcium compounds), zeolite, and hydrotalcite are preferred.

The these thermal stabilizers may be used alone or in combination of two or more.

Examples of the ultraviolet absorber includes those of a known benzophenone type, benzotriazole type, cyanoacrylate type, salicylate type, and anilide oxalate type.

Specific examples of the ultraviolet absorber include [2-hydroxy-4-(methacryloyloxyethoxy)benzophenone]-methyl methacrylate copolymer, [2-hydroxy-4-(methacryloyloxymethoxy)benzophenone]-methyl methacrylate copolymer, [2-hydroxy-4-(methacryloyloxyoctoxy)benzophenone]-methyl methacrylate copolymer, [2-hydroxy-4-methacryloyloxydodecyloxy)benzophenone]-methyl methacrylate copolymer, [2-hydroxy-4-(methacryloyloxybenziloxy)benzophenone]-methyl methacrylate copolymer, [2,2'-dihydroxy-4-(methacryloyloxyethoxy)benzophenone]-methyl methacrylate copolymer, [2,2'-dihydroxy-4-(methacryloyloxymethoxy)benzophenone]-methyl methacrylate copolymer, and [2,2'-dihydroxy-4-(methacryloyloxyoctoxy)benzophenone]-methyl methacrylate copolymer.

These ultraviolet absorbers may be used alone or in combination of two or more.

Examples of the lubricant include petroleum lubricants such as liquid paraffin; synthetic lubricants such as halogenated hydrocarbons, diester oil, silicone oil, and fluorosilicone; various modified silicon oils (epoxy-modified, amino-modified, alkyl-modified, and polyether modified); silicone-based lubricating materials such as copolymers of an organic compound such as polyoxyalkylene glycol and silicone; silicones copolymers; various fluorine surfactants such as fluoroalkyl compounds; fluorine lubricating materials such as trifluoromethylene chloride low-grade polymers; waxes such as paraffin wax and polyethylene wax; higher aliphatic alcohols; higher aliphatic amides; higher fatty acid esters; higher fatty acid salts; and molybdenum disulfide.

In particular, silicone copolymers (prepared by block or graft polymerization of silicone with resin) are preferred.

These silicon copolymers may be prepared by block or graft polymerization of silicon with resin, such as acrylic resin, polystyrene resin, polynitrile resin, polyamide resin, polyolefin resin, epoxy resin, polybutyral resin, melamine resin, vinyl chloride resin, polyurethane resin, or polyvinyl ether resin. In particular, a silicone graft copolymer is preferably used.

The above-described lubricants may be used alone or in combination of two or more.

Examples of the waxes include olefin waxes such as polypropylene wax and polyethylene wax; paraffin waxes; Fischer-Tropsch wax; microcrystalline waxes, montan waxes, fatty acid amide waxes; higher aliphatic alcohol waxes; higher fatty acid waxes; fatty acid ester waxes; carnauba waxes; and rice waxes.

These waxes may be used alone or in combination of two or more.

Examples of the colorant include inorganic pigments, organic pigments, and dyes.

Examples of the inorganic pigments include chromium pigments, cadmium pigments, iron pigments, cobalt pigments, ultramarine, and Prussian blue.

Examples of the organic pigments and dyes include carbon black; phthalocyanine pigments such as copper phthalocyanine; quinacridone pigments such as quinacridone magenta and quinacridone red; azo pigments such as hansa yellow, disazo yellow, permanent yellow, permanent red, and naphthol red; nigrosine dyes such as spirit black SB, nigrosine base, and oil black BW; oil blue; pigment yellow; pigment blue; pigment red; and alkali blue.

These colorants may be used alone or in combination of two or more.

Examples of the crystallization promoter include organic acid salts such as sodium p-tert-butylbenzoate, sodium montanate, calcium montanate, sodium palmitate, and calcium stearate; inorganic salts such as calcium carbonate, calcium silicate, magnesium silicate, calcium sulfate, barium sulfate, and talc; and metal oxides such as zinc oxide, magnesium oxide, and titanium oxide.

These crystallization promoters may be used alone or in combination of two or more.

The composite composition according to an embodiment of the invention may be subjected to various known treatments.

For example, in order to suppress hydrolysis of the biodegradable polymer compound, the composite composition may be irradiated with active energy rays. In this case, as the active energy rays, for example, electromagnetic waves, electron beams, or particle rays, or a combination thereof may be used.

Examples of the electromagnetic waves include ultraviolet (UV) rays and X-rays. Examples of the particle rays include rays of element particles such as proton and neutron. In particular, electron beam irradiation using an electron accelerator is preferably performed.

The active energy rays are preferably applied using a known apparatus, for example, a UV irradiation apparatus, an electron accelerator, or the like. The irradiation dose and irradiation strength are not particularly limited as long as hydrolysis of the biodegradable polymer compound in the composite composition is effectively delayed. For example, in use of electron rays, the acceleration voltage is preferably about 100 to 5000 kV, and the irradiation dose is preferably about 1 kGy or more.

The composite composition according to an embodiment of the invention may be use for various applications.

For example, the composite composition may be applied to various moldings such as casings of electric appliances, e.g., a DVD (digital video disk) player, a CD (compact disk) player, a desktop AV apparatus such as an amplifier, a speaker, a vehicle AV/IT apparatus, a cellular phone terminal, a PDA such as an electronic book, a video deck, a television, a projector, a television receiver, a digital video camera, a digital still camera, a printer, a radio, a radio-cassette player, a system stereo, a microphone, a headphone, TV, a keyboard, a portable audio apparatus such as a headphone stereo, a personal computer, and a personal computer peripheral device.

Besides the casings of electric appliances, the composite composition may be also used for applications, such as constituent parts of electric appliances, packing materials, and automobile interior materials.

As a method for producing a molding using the composite composition according to an embodiment of the invention, for example, pressure molding, film molding, extrusion molding, or injection molding is used. In particular, injection molding is preferred.

More specifically, the extrusion molding may be performed using a known extruder, for example, a single-screw extruder, a multi-screw extruder, or a tandem extruder, according to an ordinary method.

The injection molding may be performed using a known injection molding machine, for example, an inline screw injection molding machine, a multilayer injection molding machine, or a double-headed injection molding machine, according to an ordinary method.

### Examples

Molding samples were formed using composite compositions according to an embodiment of the invention, and the characteristics thereof were evaluated.

It is to be understood that the present invention is not limited to the examples below.

### Examples 1 to 5 and Comparative Examples 1 to 3

### Preparation of sample

(A) Biodegradable resin: polylactic acid (LACEA (H100J, manufactured by Mitsui Chemicals Inc.))
(B) Vegetable fibers
(C) Hydrolysis inhibitor

The above components (A) to (C) were mixed in the amounts shown in Table 1 by a melt kneading method.

Furthermore, predetermined additives were added, and the resultant mixture was kneaded using a Minimax Mixtruder (manufactured by Toyo Seiki Co., Ltd.) as a kneader at a nozzle temperature of 170 to 175°C with a torque of 4 to 6 kg and a retention time of 3 seconds or less.

Each of the composite compositions obtained by the above-described process was ground and then pressed at 170°C and 300 kg/cm² to prepare a plate-shaped molding having a thickness of 1.0 mm.

**Table 1**

| Sample Composition (composition unit: % by weight) | | | |
|---|---|---|---|
| | Biodegradable resin | Vegetable fiber | Hydrolysis inhibitor |
| Example 1 | Polylactic acid: 88 | Chopped hemp or cotton: 10 | Dicyclohexylcarbodiimide: 2 |
| Example 2 | Polylactic acid: 83 | Chopped hemp or cotton: 15 | Dicyclohexylcarbodiimide: 2 |
| Example 3 | Polylactic acid: 78 | Chopped hemp or cotton: 20 | Dicyclohexylcarbodiimide: 2 |
| Example 4 | Polylactic acid: 73 | Chopped hemp or cotton: 25 | Dicyclohexylcarbodiimide: 2 |
| Example 5 | Polylactic acid: 93 | Paper fibers: 5 | Dicyclohexylcarbodiimide: 2 |
| Comparative Example 1 | Polylactic acid: 98 | - | Dicyclohexylcarbodiimide: 2 |
| Comparative Example 2 | Polylactic acid: 85 | Chopped hemp or cotton: 15 | - |
| Comparative Example 3 | Polylactic acid: 95 | Paper fibers: 5 | - |

The moldings of the composite compositions prepared as described above were tested with respect to heat resistance (viscoelasticity test under high-temperature conditions) and storage property, as described below.

### (Viscoelasticity test)

Measuring apparatus: Viscoelasticity analyzer manufactured by Rheometric Co.,

Sample piece: Composite composition (length 50 mm × width 7 mm × thickness 1 mm) having the composition shown in Table 1
Frequency: 6.28 (rad/s)
Measurement start temperature: 0°C
Measurement final temperature: 160°C
Heating rate: 5 °C/min
Distortion: 0.05%

### (Preservation test)

The storage property was evaluated by measuring a change in molecular weight of each of the prepared composite compositions.

The molecular weight of each sample was considered as the initial molecular weight. Each sample was preserved in a constant temperature and humidity bath at 80°C and a relative humidity of 80% for 100 hours and then measured with respect to the molecular weight after preservation.

The molecular weight maintenance ratio of each sample was calculated by dividing the molecular weight after preservation by the initial molecular weight. When the molecular weight maintenance ratio was over 90%, the practical storage property was regarded as "good", and when the molecular weight maintenance ratio was 90% or less, the practical storage property was regarded as "bad". The results are shown in Table 2.

The molecular weigh was measured as follows:
The molecular weight was the weight-average molecular weight (in terms of polystyrene) measured by gel permeation chromatography (GPC).
Apparatus: WILLIPORE Waters 600E system controller
Detector: UV (Waters 484) and RI (Waters 410)
Standard sample: polystyrene
Operation: A sample was dissolved in chloroform so that the concentration was 0.15% by weight, and then stirred for 2 hours to produce a solution, and then the resulting solution was passed through a 0.25 µm filter to prepare a measurement sample for the apparatus.

### [Evaluation of heat resistance]

Fig. 1 shows the results of the viscoelasticity test of the sample of each of Examples 1 to 5 and Comparative Example 1, and the evaluation results are shown in Table 2.

As shown in Fig. 1, the samples of Examples 1 to 5 prepared using the composite compositions according to an embodiment of the invention maintain excellent strength even in a temperature range higher than the glass transition temperature (about 58°C) of the biodegradable resin (polylactic acid), and thus the excellent effect of improving heat resistance is achieved, as compared with the sample of Comparative Example 1 not containing the vegetable fibers.

### [Evaluation of storage property]

Table 2 shows the evaluation results of the storage property of the sample of each of Examples 1 to 5 and Comparative Examples 1 to 3.

**Table 2**

| | Heat resistance | Storage property |
|---|---|---|
| Example 1 | good | good |
| Example 2 | good | good |
| Example 3 | good | good |
| Example 4 | good | good |
| Example 5 | good | good |
| Comparative Example 1 | bad | good |
| Comparative Example 2 | good | bad |
| Comparative Example 1 | good | bad |

As shown in Table 2, with the samples of Examples 1 to according to an embodiment of the invention, the very excellent storage property in a constant temperature and humidity environment was realized by adding the hydrolysis inhibitor.

The above-described results indicate that a composite composition according to an embodiment of the invention contains an organic polymer compound having biodegradability, vegetable fibers, and a hydrolysis inhibitor, and thus has both heat resistance and storage property, thereby realizing practically sufficient storage stability even when used for, for example, a casing for an electronic device or the like in which a power supply or driving source generates heat.

Namely, the composite composition has high heat resistance and stability and may be used for various practical moldings. Also, when disposed, the composite composition is finally decomposed into components safe for living organisms and the global environment, for example, water, carbon dioxide. Therefore, the composite composition is a material having the minimum influence on environments, and may decrease environmental pollution due to disposal when used for moldings such as casings of various electric appliances and packing materials.

## Claims

1. A composite composition comprising:
at least one organic polymer compound having biodegradability;
vegetable fibers; and
a hydrolysis inhibitor for the organic polymer compound having biodegradability;
wherein said organic polymer is an aliphatic polyester which has a molecular weight (number-average molecular weight) of 30,000 to 200.000;
wherein the mixing ratio (weight ratio) of the aliphatic polyester to the vegetable fibers is 95/5 to 40/60 (aliphatic polyester/vegetable fibers).

2. The composite composition according to claim 1. wherein the aliphatic polyester is at least one of polylactic acid, polycaprolactone, polyhydroxybutyric acid, polyhydroxyvaleric acid, polyethylene succinate, polybutylene succinate, polybutylene adipate, polymalic acid, and microbially-synthesized polyesters, or a copolymer containing at least any of these compounds.

3. The composite composition according to claim 1, wherein the vegetable fibers are cotton fibers or paper fibers.

4. The composite composition according to claim 1, wherein the hydrolysis inhibitor is at least one compound of carbodiimide compounds, isocyanate compounds, and oxozoline compounds.

5. A molding produced using the composite composition of claim 1 containing at least one organic polymer compound having biodegradability, vegetable fibers, and a hydrolysis inhibitor for the organic polymer compound having biodegradability.

## Patentansprüche

1. Kompositzusammensetzung, umfassend:
mindestens eine organische Polymerverbindung, die Bioabbaubarkeit aufweist;
Pflanzenfasern; und
einen Hydrolyseinhibitor für die organische Polymerverbindung, die Bioabbaubarkeit aufweist;
worin das organische Polymer einen aliphatischen Polyester darstellt, der ein Molekulargewicht (zahlengemitteltes Molekulargewicht) von 30.000 bis 200.000 aufweist;
worin das Mischungsverhältnis (Gewichtsverhältnis) des aliphatischen Polyesters zu den Pflanzenfasern 95/5 bis 40/60 (aliphatischer Polyester/Pflanzenfasern) beträgt.

2. Kompositzusammensetzung nach Anspruch 1, worin der aliphatische Polyester mindestens eines darstellt von Polymilchsäure, Polycaprolacton, Polyhydroxybuttersäure, Polyhydroxyvaleriansäure, Polyethylensuccinat, Polybutylensuccinat, Polybutylenadipat, Polyäpfelsäure und mikrobiell synthetisierten Polyestern, oder ein Copolymer, enthaltend mindestens irgendeine dieser Verbindungen.

3. Kompositzusammensetzung nach Anspruch 1, worin die Pflanzenfasern Baumwollfasern oder Papierfasern darstellen.

4. Kompositzusammensetzung nach Anspruch 1, worin der Hydrolyseinhibitor mindestens eine Verbindung darstellt von Carbodiimidverbindungen, Isocyanatverbindungen und Oxozolinverbindungen.

5. Formteil, hergestellt unter Verwendung der Kompositzusammensetzung nach Anspruch 1, enthaltend mindestens eine organische Polymerverbindung, die Bioabbaubarkeit aufweist, Pflanzenfasern und einen Hydrolyseinhibitor für die organische Polymerverbindung, die Bioabbaubarkeit aufweist.

## Revendications

1. Composition composite comprenant :
au moins un composé polymère organique présentant une biodégradabilité ;
des fibres végétales ; et
un inhibiteur d'hydrolyse pour le composé polymère organique présentant une biodégradabilité ;
dans laquelle ledit polymère organique est un polyester aliphatique qui présente un poids moléculaire (poids moléculaire moyen en nombre) de 30 000 à 200 000 ;
dans laquelle le rapport de mélange (rapport massique) du polyester aliphatique aux fibres végétales est de 95/5 à 40/60 (polyester aliphatique/fibres végétales).

2. Composition composite selon la revendication 1, dans laquelle le polyester aliphatique est au moins un choisi parmi le poly(acide lactique), la polycaprolactone, le poly(acide hydroxybutyrique), le poly(acide hydroxyvalérique), le poly(succinate d'éthylène), le poly(succinate de butylène), le poly(adipate de butylène), le poly(acide malique) et des polyesters microbe-synthétisés ou un copolymère contenant au moins l'un de ces composés.

3. Composition composite selon la revendication 1, dans laquelle les fibres végétales sont des fibres de coton ou des fibres de papier.

4. Composition composite selon la revendication 1, dans laquelle l'inhibiteur d'hydrolyse est au moins un composé parmi des composés de carbodiimide, des composés d'isocyanate et des composés d'oxozoline.

5. Moulage produit en utilisant la composition composite de la revendication 1 contenant au moins un composé polymère organique présentant une biodégradabilité, des fibres végétales et un inhibiteur d'hydrolyse pour le composé polymère organique présentant une biodégradabilité.
